# EUROPEAN PATENT SPECIFICATION

(11) **EP 2 007 108 B1**
(45) Date of publication and mention of the grant of the patent: **16.05.2012**
(21) Application number: 08103169.2
(22) Date of filing: 28.03.2008
(51) Int. Cl.: H04L 29/06

(54) **Connector for filtering network traffic**
Verbinder zur Filterung von Netzwerkverkehr
Connecteur pour filtrage du trafic de réseau

(30) Priority: 19.06.2007 KR 20070059963
(43) Date of publication of application: 24.12.2008
(73) Proprietor: Samsung Electronics Co., Ltd., Gyeonggi-do 442-742 (KR)
(72) Inventor: Bahn, Duk-hoon, Seoul (KR); Cho, Jung-yon, Yeongtong-gu, Suwon-si, Gyeonggi-do (KR)
(74) Representative: Hewett, Jonathan Michael Richard

(56) References cited:
- WO-A-95/01023
- WO-A-99/21340
- WO-A-2005/074227
- US-A1- 2006 274 771

## Description

The present invention relates to a connector and a communication method thereof, and more particularly, to a connector which is capable of being connected to apparatuses forming a network, and a communication method thereof.

A connector such as RJ-45 is connected to a local area network (LAN) card or a hub to allow data exchange between network apparatuses. Examples of network apparatuses may include a computer, a printer, a TV, and other network devices known in the art, in which a relay such as a hub, a modem or the like and a network device such as a LAN card are installed. An example of a network system is a Transmission Control Protocol/Internet Protocol (TCP/IP) Ethernet system in which apparatuses included in a network form a sub-network.

However, apparatuses which belong to the same sub-network may have weak security. For example, in a home having a home network, it is not difficult to access apparatuses forming the home network from outside the network. Particularly, in an apartment in which a plurality of homes forms the same sub-network, access may be made from an apparatus of a home to an apparatus of another home. In addition, in an office, access may be made between apparatuses in different departments, the apparatuses forming the same sub-network.
There is a need to individually establish security of apparatuses forming a network or setup a different sub-network to form a network among only particular apparatuses.

In particular, some apparatuses which belong to a sub-network may form a particular network, separately from other apparatuses of the same sub-network, for security or according to a user's need. For example, the particular network may include apparatuses which belong to each home in an apartment, or include apparatuses which belong to each department in an office.

However, a user has to know a complicated access control method in order to set security of an apparatus. That is, there arises a problem in that it is too complicated for the user to set security to allow access from only particular apparatuses which belong to a network. For example, the user needs to know the Internet Protocol (IP) address or media access control (MAC) address and has difficulty adding to, deleting from, modifying, etc an access control list.

International Patent Application No. WO 99/21340 discloses a processor which determines if a source IP of a packet matches a stored IP address. Data is either discarded or forwarded depending on the processor configuration.

International Patent Application No. WO 2005/074227 discloses a dongle having a fingerprint scanner and a card reader, for added security.

International Patent Application No. WO 95/01023 discloses a segmented virtual LAN in which hubs of each segment can be associated with each other.

United States Patent Application No. US 2006/274771 discloses a device for extracting MAC address and a piece of VLAN tag information from a reception packet and storing the extracted data in an association table.

According to an aspect of the present invention, there is provided a connector according to claim 1.

According to another aspect of the present invention, there is provided a communication method according to claim 11.

Optional features are set out in the dependent claims.

The above and/or other aspects of the present invention will become apparent and more readily appreciated from the following description of the embodiments, taken in conjunction with the accompanying drawings, in which:
Figure 1 is a block diagram showing a configuration of a connector according to an embodiment of the present invention;
Figure 2 is a block diagram showing a configuration of a connector according to another embodiment of the present invention;
Figure 3 is a block diagram showing a configuration of two connectors according to an embodiment of the present invention;
Figure 4 is a diagram showing a network configuration according to an embodiment of the present invention;
Figure 5A is a view showing an external appearance of a connector according to an embodiment of the present invention;
Figure 5B is a view showing an external appearance of a connector according to another embodiment of the present invention;
Figure 6 is a flow chart illustrating an operation of a connector according to an embodiment of the present invention; and
Figure 7 is a flow chart illustrating an operation of a connector according to another embodiment of the present invention.

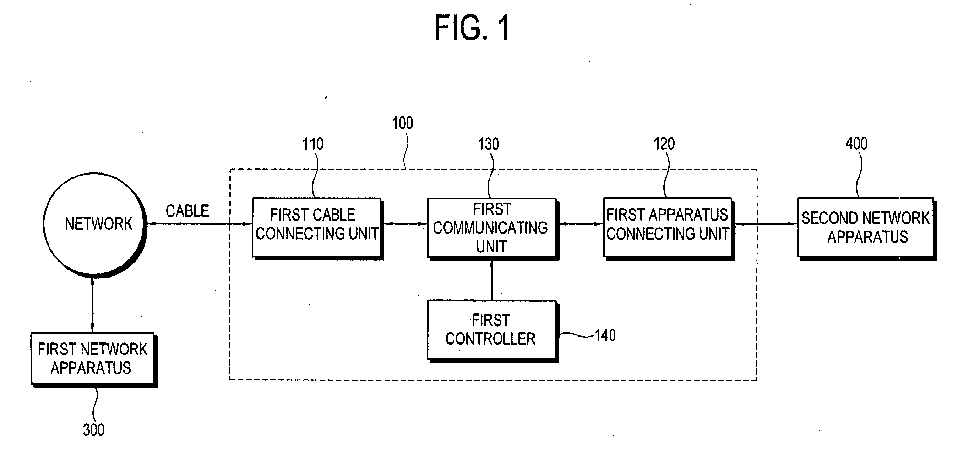

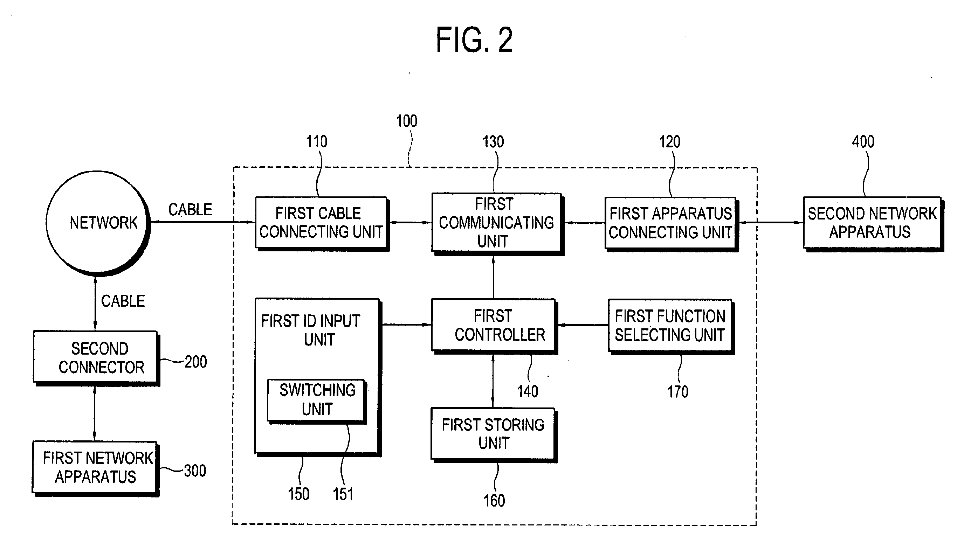

Figure 1 is a block diagram showing a configuration of a connector according to an embodiment of the present invention, and Figure 2 is a block diagram showing a configuration of a connector according to another embodiment of the present invention. A connector according to an embodiment of the present invention is connected to a network device of a network apparatus and transmits a signal, which is received from a different network apparatus, to the network apparatus to which the connector is connected. For example, the connector includes one end coupled to a LAN card of a computer and the other end coupled to an RJ-45 plug to which an unshielded twisted pair (UTP) cable is connected, and it is determined based on preset information whether to pass or intercept signals that are transmitted / received through both ends of the connector.

In the following description, for the sake of convenience, it is assumed that the connector is differentiated into a first connector 100 connected to a second network apparatus 400 and a second connector 200 connected to a first network apparatus 300 although the first and second connectors have the same configuration.
As shown in Figure 1, the first connector 100 includes a first cable connecting unit 110, a first apparatus connecting unit 120, a first communicating unit 130 and a first controller 140.

The first cable connecting unit 110 is connected with a cable via which a signal is transmitted from the first network apparatus 300. Specifically, the first cable connecting unit 110 is connected to a plug of the cable that connects a network to the first cable connecting unit 110. For example, the first cable connecting unit 110 may be connected with an RJ-45 plug of a UTP cable.

The first apparatus connecting unit 120 is connected to the second network apparatus 400. Specifically, the first apparatus connecting unit 120 is connected to a network device of the second network apparatus 400. For example, the first apparatus connecting unit 120 may be connected to an RJ-45 port of a LAN card. The first communicating unit 130 communicates with the first and second network apparatuses 300 and 400. The first communicating unit 130 delivers or intercepts the signal, which is received from the first network apparatus 300, to the second network apparatus 400 under control of the first controller 140. In addition, the first communicating unit 130 may generate a new signal or combine signals under control of the first controller 140.

If the first network apparatus 300 that transmits the signal received via the first cable connecting unit 110 is a preset apparatus, the first controller 140 controls the first communicating unit 130 to deliver the signal to the second network apparatus 400. The signal may include all signals for communication in a network of a TCP/IP Ethernet system. The signal also includes identification information of the first network apparatus 300. The identification information includes a MAC address, an IP address and so on. In addition, the signal may include a network identification (ID) for network setting. Accordingly, the first controller 140 may discriminate an apparatus, which transmits the signal, among a plurality of apparatuses connected to the network based on the identification information included in the signal. For example, if the identification information of the apparatus that transmits the signal is identification information of apparatuses having the same network ID, the first controller 140 passes the signal, which is received via the first cable connecting unit 110, to the first apparatus connecting unit 120, and, if the identification information is not the pre-stored information, controls the first communicating unit 130 to intercept the signal.

As shown in Figure 2, the first connector 100 may further include a first ID input unit 150, a first storing unit 160 and a first function selecting unit 170.

The first ID input unit 150 receives a preset network ID from a user. The preset network ID may be binary data composed of a plurality of bits. In addition, the first ID input unit 150 may include a switching unit 151 which may set each bit of the plurality of bits.

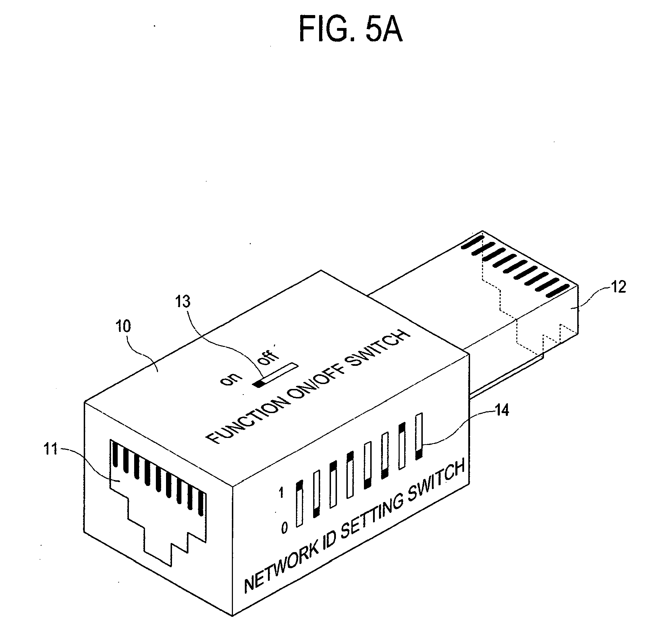

As shown in Figure 5A, the first connector 100 may be embodied in the form of a dongle 10. The dongle 10 includes a terminal 11 for connection of an RJ-45 plug on one side and a terminal 12 for connection of a LAN card on the other side. In addition, the dongle 10 includes switches 14 for network ID setting. If a network ID has an 8 bit binary data format, the dongle 10 may be provided with 8 switches 14 for setting respective bits.

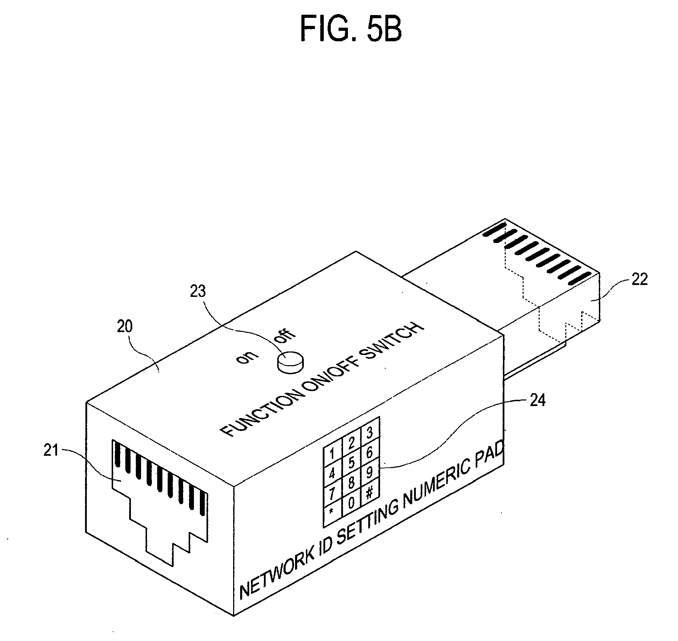

As an alternative embodiment, the first ID input unit 150 may be embodied by a numeric pad 24 for network ID setting, as shown in Figure 5B.
If the network ID of the first network apparatus 300 is a preset network ID, the first controller 140 determines the first network apparatus 300 to be a preset apparatus. Specifically, if the first controller 140 receives a signal including a network ID via the first cable connecting unit 110, the first controller 140 compares the network ID of the received signal with a network ID inputted through the first ID input unit 150 to determine whether or not the network IDs match, and, based on the determination, controls the first communicating unit 130 to deliver only a signal, which is transmitted from an apparatus having the same network ID, to the second network apparatus 400. For example, a signal including the network ID may be a network start signal having a predetermined format. The network start signal is constituted by a plurality of fields, each of which includes information such as an instruction code, an IP address, a protocol, a port, a network ID, a MAC address, cyclic redundancy check (CRC) or the like.

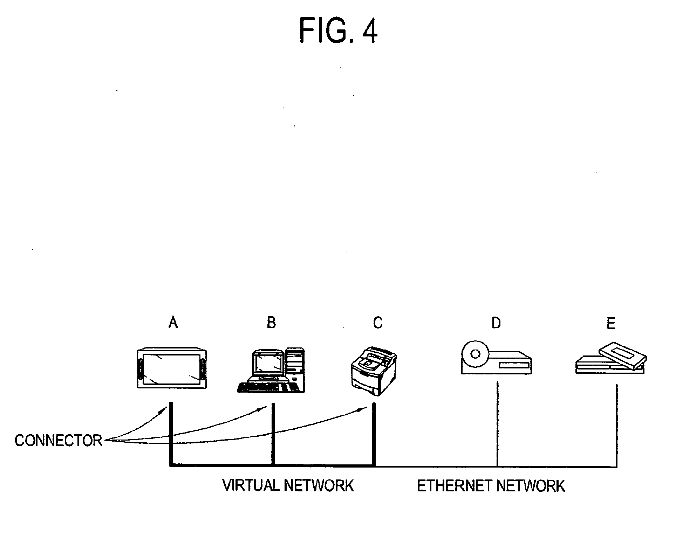

As shown in Figure 4, a user may connect the connector to network apparatuses A, B and C, for which the user desires to set security, of a plurality of network apparatuses A, B, C, D and E. Then, the user inputs a network ID through the ID input unit of the connector. The network apparatuses A, B and C to which the connector inputted the same network ID is connected can communicate with each other, however, network apparatuses D and E to which the connector is not connected can not access the network apparatuses A, B and C to which the connector is connected. Accordingly, the user has to input the same network ID to the connector connected to the network apparatuses A, B and C for security setting. The network ID is generated and processed in the connector.

A plurality of MAC addresses may be stored in the first storing unit 160 which may be embodied by a nonvolatile memory.

The first controller 140 stores a MAC address of the first network apparatus 300 having the preset network ID in the first storing unit 160. That is, the first controller 140 stores the MAC address of a network apparatus having the same network ID in the first storing unit 160. More specifically, if the first controller 140 receives a signal including a network ID via the first cable connecting unit 110, the first controller 140 compares the network ID included in the received signal with a network ID inputted through the first ID input unit 150 to determine whether or not both network IDs match, and, if it is determined that both network IDs match, stores the MAC address of the first network apparatus 300, which transmits the signal, in the first storing unit 160.

The first controller 140 confirms the MAC address of the first network apparatus 300 for the signal transmitted from the first network apparatus 300 having the preset network ID, and, if the MAC address is a preset MAC address, the first controller 140 determines the first network apparatus 300 to be a preset apparatus. Specifically, if it is determined that the network ID of the first network apparatus 300 is the preset network ID, the first controller 140 stores the MAC address of the first network apparatus 300 in the storing unit 160, and, if the MAC address of the first network apparatus 300 is one of a plurality of MAC addresses stored in the storing unit 160, controls the first communicating unit 130 to deliver the signal, which is received from the first network apparatus 300, to the second network apparatus 400.

The first controller 140 may delete the MAC address of the first network apparatus 300 that transmits the signal based on information of the signal received through the first cable connecting unit 110. For example, if the first controller 140 receives a network secession signal having a predetermined format from the first network apparatus 300, the first controller 140 deletes the MAC address of the first network apparatus 300 from the storing unit 160. The network secession signal may be constituted by a plurality of fields, each of which includes information such as an instruction code, an IP address, a protocol, a port, a network ID, a MAC address, cyclic redundancy check (CRC) or the like.

The first controller 140 may control the first communicating unit 130 to deliver the signal to the second network apparatus 400 according to the MAC address of the preset apparatus. For example, the first controller 140 detects and stores a MAC address of an apparatus, which is the destination of the signal, from the signal transmitted from the second network apparatus 400. Thereafter, although the first network apparatus 300 has a first network ID that does not match a second network ID of the second network apparatus 400 or no first network ID, the first network apparatus 300 can communicate with the second network apparatus 400.

The first function selecting unit 170 receives an ON/OFF selection signal from a user. As shown in Figure 5A, the first function selecting unit 170 may be embodied by an ON/OFF switch 13. As an alternative embodiment, the first functional selecting unit 170 may be embodied by an ON/OFF button 23, as shown in Figure 5B.

The first controller 140 may control the first communicating unit 130 to deliver a signal, which is transmitted from a preset apparatus, to the second network apparatus 400 according to an input from the first function selecting unit 170. For example, the first controller 140 generates a network start signal upon receiving an ON signal from the first function selecting unit 170, and generates a network secession signal upon receiving an OFF signal from the first function selecting unit 170. The first controller 140 controls the first communicating unit 130 to deliver the generated network start signal and network secession signal to the second network apparatus 400.

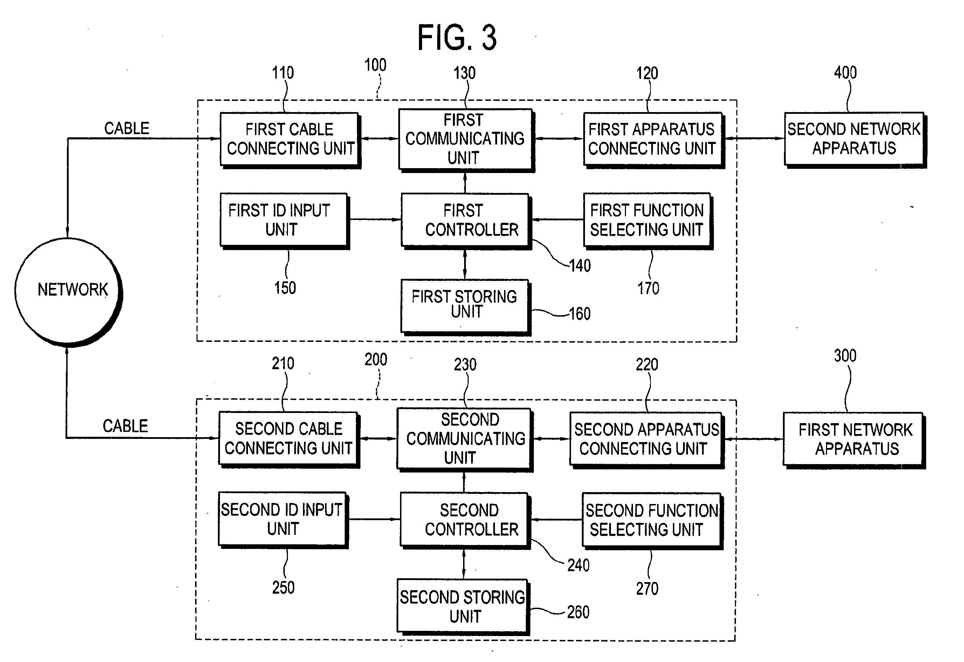

Hereinafter, the second connector 200 according to an embodiment of the present invention will be described with reference to Figure 3.

As shown in Figure 3, the second connector 200 includes a second cable connecting unit 210, a second apparatus connecting unit 220, a second communicating unit 230 and a second controller 240. In addition, the second connector 200 may further include a second ID input unit 250, a second storing unit 260 and a second function selecting unit 270.

The second cable connecting unit 210 is connected to a cable via which a signal is transmitted from and received by the first network apparatus 300.

The second apparatus connecting unit 220 is connected to the first network apparatus 300.

The second communicating unit 230 communicates with the first network apparatus 300 and the second network apparatus 400.

The second controller 240 controls the second communicating unit 230 to deliver a preset network ID to the second network apparatus 400. The second connector 200 connected to the first network apparatus 300 transmits a network start signal for network setting or a network secession signal to the first connector 100 connected to the second network apparatus 400.

The second ID input unit 250 receives the preset network ID from a user. The network ID may be binary data of a plurality of bits. In addition, the second ID input unit 250 may include a switching unit which may set each bit of the plurality of bits.

The second function selecting unit 270 receives an ON/OFF selection signal from a user.

The second controller 240 controls the second communicating unit 230 to deliver the preset network ID to the second network apparatus 400 according to an input from the second function selecting unit 270. For example, if the input from the second function selecting unit 270 is an ON signal, or if the second connector 200 receives an initial signal from the first network apparatus 300, the second connector 200 transmits a network start signal to all apparatuses connected to a network. In addition, if the input from the second function selecting unit 270 is an OFF signal, the second connector 200 transmits a network secession signal to all apparatuses connected to the network. Each of the network start signal and the network secession signal includes a network ID of the second connector 200 and a MAC address of the first network apparatus 300. Upon receiving the network start signal, the first connector 100 determines whether or not a received network ID matches a network ID of the first connector 100, and, if it is determined that the received network ID matches the network ID of the first connector 100, stores the received MAC address. Thereafter, if the MAC address of the received signal matches the pre-stored one, the first connector 100 passes the received signal. Upon receiving the network secession signal, the first connector 100 deletes the MAC address of the received network secession signal from a plurality of pre-stored MAC addresses and intercepts the received signal.

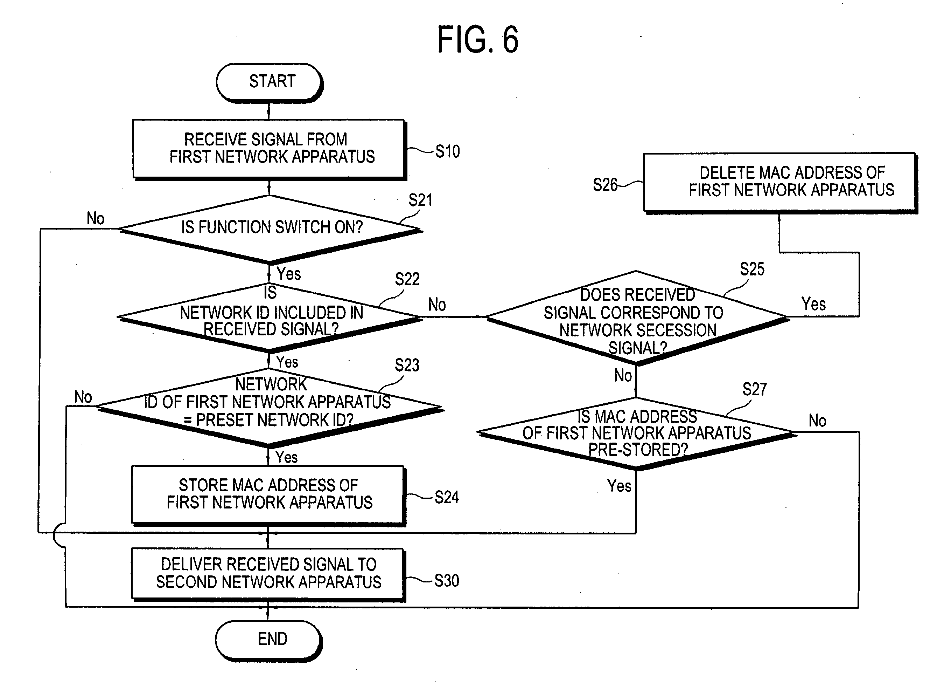

Hereinafter, an operation of the first connector 100 according to an embodiment of the present invention will be described with reference to Figure 6.

The first connector 100 receives a signal from the first network apparatus 300 at operation S10. The first connector 100 determines whether or not the first network apparatus 300 that transmits the signal is a preset apparatus at operation S20. If it is determined that the first network apparatus 300 is the preset apparatus, the first connector 100 delivers the signal to the second network apparatus 400 at operation S30.

First, the first connector 100 receives the signal from the first network apparatus 300 via the first cable connecting unit 110 at the operation S10.

Specifically, the operation S20 may include operations S21, S22, S23, S24, S25, S26 and S27. The first controller 140 determines whether or not a function switch of the first function switching unit 170 is in an ON state at operation S21. If it is determined at the operation S21 that the function switch is in the ON state, the first controller 140 determines whether or not a network ID is in the received signal at operation S22. If it is determined at the operation S22 that the network ID is in the received signal, the first controller 140 determines whether the network ID received from the first network apparatus 300 is a preset network ID at operation S23. If it is determined at the operation S23 that the received network ID is the preset network ID, the first controller 140 stores a MAC address of the first network apparatus 300 in the first storing unit 160 at operation S24.

Next, the first controller 140 controls the first communicating unit 130 to deliver the signal, which is received from the first network apparatus 300, to the second network apparatus 400 at operation S30.

If it is determined at the operation S22 that the network ID is not included in the received signal, the first controller 140 determines whether or not the received signal is a network secession signal at operation S25. If it is determined at the operation S25 that the received signal is the network secession signal, the first controller 140 deletes the MAC address of the first network apparatus 300 at operation S26. If it is determined at the operation S25 that the received signal is not the network secession signal, the first controller 140 determines whether or not the MAC address of the first network apparatus 300 is a pre-stored one at operation S27. If it is determined at the operation S27 that the MAC address of the first network apparatus 300 is the pre-stored one, the first controller 140 performs the operation S30. If it is determined at the operation S21 that the function switch is in an OFF state, the first controller 140 performs the operation S30.

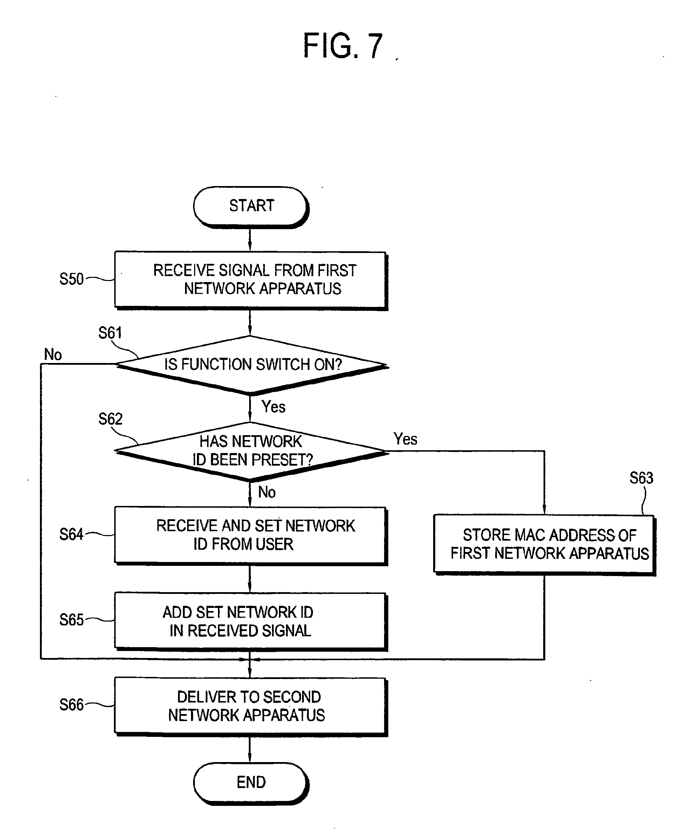

Hereinafter, an operation of the second connector 200 according to another embodiment of the present invention will be described with reference to Figure 7.

The second connector 200 receives a signal from the first network apparatus 300 at operation S50. The second connector 200 delivers the signal added a preset network ID to the second network apparatus 400 at operation S60.

First, the second connector 200 receives the signal from the first network apparatus 300 via the apparatus connecting unit 220 at the operation S50.

Specifically, the operation S60 may include operations S61, S62, S63, S64, S65 and S66. The second controller 240 determines whether the function switch of the second function selecting unit 270 is in an ON state at operation S61. If it is determined at the operation S61 that the function switch is in the ON state, the second controller 240 determines whether or not a network ID has been preset at operation S62. If it is determined at the operation S62 that the network ID has been preset, the second controller 240 stores the MAC address of the first network apparatus 300 in the second storing unit 260 at operation S63. If it is determined at the operation S62 that the network ID has not been preset, the second controller 240 receives the network ID from the second ID input unit 250 and stores the received network ID in the second storing unit 260 at operation S64. Next, the stored network ID is included in the received signal at operation S65. Next, the signal is delivered to the second network apparatus 400 at operation S66. If it is determined at the operation S61 that the function switch is in an OFF state, the second controller 240 performs the operation S66.

As is apparent from the above description, the present invention provides a connector and a communication method thereof, which make it possible to form a network of only apparatuses, which are desired by a user, among a plurality of network apparatuses by a method convenient to the user.

Although a few embodiments of the present invention have been shown and described, it will be appreciated by those skilled in the art that changes may be made in these embodiments without departing from the principles of the invention, the scope of which is defined in the appended claims.

## Claims

1. A connector comprising:
a cable connecting unit (110) that is connectable with a cable via which a signal is transmitted from a first network apparatus (300);
an apparatus connecting unit (120) that is connectable with a second network apparatus (400);
a communication unit (130) arranged to communicate with the first network apparatus and the second network apparatus;
an identification (ID) input unit that is integral to the connector, containing controls enabling a user to enter a preset network ID; and
a controller (140) arranged to control the communication unit to deliver the signal, which is received from the first network apparatus via the cable connecting unit, to the second network apparatus if the first network apparatus is connected to a network which has the same network ID as the preset network ID inputted through the ID input unit; and
a storage unit (160), wherein the controller is arranged to store the medium access control, MAC, address of the first network apparatus in the storage unit in response to determining that the first network apparatus has the same network ID as the preset network ID.

2. A connector according to claim 1, wherein if the received signal does not contain the network ID, the controller (140) is arranged to control the communication unit (130) to deliver the preset network ID to the second network apparatus.

3. The connector according to claim 1 or claim 2, wherein the preset network ID is binary data of a plurality of bits.

4. The connector according to claim 3, wherein the ID input unit (150) comprises a switching unit (151) that sets each bit of the plurality of bits.

5. The connector according to claim 1, wherein the controller (140) is arranged to confirm a MAC address of the first network apparatus (300) for the signal transmitted from the first network apparatus having the preset network ID, and, if the MAC address is a preset MAC address, the controller is arranged to designate the first network apparatus (300) as a preset apparatus.

6. The connector according to any one of the preceding claims, wherein the controller (140) is arranged to delete the MAC address of the first network apparatus (300) that transmits the signal, based on information of the signal received via the cable connecting unit (110).

7. The connector according to claim 1, wherein the controller (140) is arranged to control the communication unit (130) to deliver the signal to the second network apparatus (400) based on a media access control (MAC) address of the preset apparatus.

8. The connector according to claim 1, further comprising a function selecting unit (170) arranged to receive an ON/OFF selection signal from a user,
wherein the controller (140) controls the communication unit (130) to deliver the signal, which is transmitted from the preset apparatus, to the second network apparatus (400) according to the ON/OFF selection signal through the function selecting unit.

9. The connector according to claim 2, further comprising a function selecting unit (170) arranged to receive an ON/OFF selection signal from a user,
wherein the controller (140) is arranged to control the communication unit (130) to deliver the preset network ID to the second network apparatus (400) according to the ON/OFF selection signal through the function selecting unit (170).

10. The connector according to any one of the preceding claims, wherein the connector is a dongle.

11. A communication method performed using a connector, comprising:
a user inputting a preset network ID via controls integral to the connector;
receiving a signal from a first network apparatus via a cable (300);
determining whether the first network apparatus that transmits the signal is connected to a network which has the same network ID as the preset network ID received from the user;
delivering the signal to a second network apparatus (400) if the first network apparatus is connected to a network having the preset network ID; and
storing the MAC address of the first network apparatus in response to determining that the first network apparatus has the same network ID as the present network ID.

12. The communication method according to claim 11, wherein if the received signal does not contain the network ID, a preset network ID is added to the signal and the signal is delivered to the second network apparatus (400).

13. The communication method according to claim 11 or 12, wherein the preset network ID is binary data of a plurality of bits.

14. The communication method according to claim 11 or claim 12, comprising confirming a MAC address of the first network apparatus (300) for the signal transmitted from the first network apparatus having the preset network ID and designating the first network apparatus to be a preset apparatus if the MAC address is a preset MAC address.

15. The communication method according to any one of claims 11 to 14, further comprising deleting the MAC address of the first network apparatus (300) that transmits the signal based on information of the received signal.

16. The communication method according to claim 14, comprising delivering the signal to the second network apparatus (400) based on a media access control (MAC) address of the preset apparatus.

## Patentansprüche

1. Verbinder, umfassend:
eine Kabelanschlusseinheit (110), die mit einem Kabel anschließbar ist, über das ein Signal von einer ersten Netzwerkvorrichtung (300) übertragen wird;
eine Anschlusseinheit (120) für die Vorrichtung, die an eine zweite Netzwerkvorrichtung (400) anschließbar ist;
eine Kommunikationseinheit (130), die eingerichtet ist, mit der ersten Netzwerkvorrichtung und der zweiten Netzwerkvorrichtung zu kommunizieren;
eine Identifikationseingabeeinheit (ID), die integral zum Verbinder ist, die Steuerungen enthält, die einem Anwender ermöglichen, eine voreingestellte Netzwerk-ID einzugeben; und
einen Kontroller (140), der eingerichtet ist, die Kommunikationseinheit zu steuern das Signal, welches von der ersten Netzwerkvorrichtung über die Kabelanschlusseinheit empfangen wird, an die zweite Netzwerkvorrichtung zu liefern, wenn die erste Netzwerkvorrichtung an ein Netzwerk angeschlossen ist, das die gleiche Netzwerk-ID wie die voreingestellte Netzwerk-ID hat, die durch die ID-Eingabevorrichtung eingegeben wurde; und
eine Speichereinheit (160), wobei der Kontroller eingerichtet ist, die Medienzugriffskontrolladresse, MAC-Adresse, der ersten Netzwerkvorrichtung in der Speichereinheit als Antwort auf die Ermittlung zu speichern, dass die erste Netzwerkvorrichtung die gleiche Netzwerk-ID wie die voreingestellte Netzwerk-ID hat.

2. Verbinder nach Anspruch 1, wobei, wenn das Empfangssignal die Netzwerk-ID nicht enthält, der Kontroller (140) eingerichtet ist, die Kommunikationseinheit (130) zu steuern, die voreingestellte Netzwerk-ID an die zweite Netzwerkvorrichtung zu liefern.

3. Verbinder nach Anspruch 1 oder Anspruch 2, wobei die voreingestellte Netzwerk-ID binäre Daten einer Vielheit von Bits sind.

4. Verbinder nach Anspruch 3, wobei die ID-Eingabeeinheit (150) eine Schalteinheit (151) umfasst, die jedes Bit der Vielheit von Bits einstellt.

5. Verbinder nach Anspruch 1, wobei der Kontroller (140) eingerichtet ist, eine MAC-Adresse der ersten Netzwerkvorrichtung (300) für das Signal zu bestätigen, das von der ersten Netzwerkvorrichtung übertragen wurde, welche die voreingestellte Netzwerk-ID aufweist und, wenn die MAC-Adresse eine voreingestellte MAC-Adresse ist, der Kontroller eingerichtet ist, die erste Netzwerkvorrichtung (300) als eine voreingestellte Vorrichtung zu designieren.

6. Verbinder nach einem beliebigen der vorhergehenden Ansprüche, wobei der Kontroller (140) eingerichtet ist, die MAC-Adresse der ersten Netzwerkvorrichtung (300) zu löschen, die das Signal überträgt, das auf Information des Signals beruht, das über die Kabelanschlusseinheit (110) empfangenen wurde.

7. Verbinder nach Anspruch 1, wobei der Kontroller (140) eingerichtet ist, die Kommunikationseinheit (130) zu steuern, das Signal an die zweite Netzwerkvorrichtung (400), basierend auf einer Medienzugriffskontrolladresse (MAC-Adresse) der voreingestellten Vorrichtung, zu liefern.

8. Verbinder nach Anspruch 1, der weiter eine Funktionswähleinheit (170) umfasst, die eingerichtet ist ein EIN/AUS-Wählsignal von einem Anwender zu empfangen, wobei der Kontroller (140) die Kommunikationseinheit (130) steuert, das Signal, das von der voreingestellten Vorrichtung übertragen wird, an die zweite Netzwerkvorrichtung (400) übereinstimmend mit dem EIN/AUS-Wählsignal durch die Funktionswahleinheit zu liefern.

9. Verbinder nach Anspruch 2, der weiter eine Funktionswähleinheit (170) umfasst, die eingerichtet ist, ein EIN/AUS-Wählsignal von einem Anwender zu empfangen,
wobei der Kontroller (140) eingerichtet ist, die Kommunikationseinheit (130) zu steuern, die voreingestellte Netzwerk-ID, übereinstimmend mit dem EIN/AUS-Wählsignal, durch die Funktionswähleinheit (170) an die zweite Netzwerkvorrichtung (400) zu liefern.

10. Verbinder nach einem beliebigen der vorhergehenden Ansprüche, wobei der Verbinder ein Dongle ist.

11. Kommunikationsverfahren, das mittels eines Verbinders ausgeführt wird, umfassend:
Eingeben einer voreingestellten Netzwerk-ID durch einen Anwender über Steuerungen, die integral zum Verbinder sind;
Empfangen eines Signals von einer ersten Netzwerkvorrichtung über ein Kabel (300);
Ermitteln, ob die erste das Signal übertragende Netzwerkvorrichtung an ein Netzwerk angeschlossen ist, das die gleiche Netzwerk-ID wie die vom Anwender empfangene voreingestellte Netzwerk-ID aufweist;
Liefern des Signals an eine zweite Netzwerkvorrichtung (400), wenn die erste Netzwerkvorrichtung an ein Netzwerk angeschlossen ist, das die voreingestellte Netzwerk-ID aufweist; und
Speichern der MAC-Adresse der ersten Netzwerkvorrichtung als Antwort auf die Ermittelung, dass die erste Netzwerkvorrichtung die gleiche Netzwerk-ID wie die voreingestellte Netzwerk-ID aufweist.

12. Kommunikationsverfahren nach Anspruch 11, wobei, wenn das Empfangssignal nicht die Netzwerk-ID enthält, eine voreingestellte Netzwerk-ID dem Signal hinzugefügt wird und das Signal an die zweite Netzwerkvorrichtung (400) geliefert wird.

13. Kommunikationsverfahren nach Anspruch 11 oder Anspruch 12, wobei die voreingestellte Netzwerk-ID binäre Daten einer Vielheit von Bits sind.

14. Kommunikationsverfahren nach Anspruch 11 oder Anspruch 12, das die Bestätigung einer MAC-Adresse der ersten Netzwerkvorrichtung (300) für das Signal, das von der ersten Netzwerkvorrichtung mit der voreingestellten Netzwerk-ID übertragen wurde und Designieren der ersten Netzwerkvorrichtung, als eine voreingestellte Vorrichtung umfasst, wenn die MAC-Adresse eine voreingestellte MAC-Adresse ist.

15. Kommunikationsverfahren nach einem beliebigen der Ansprüche 11 bis 14, das weiter das Löschen der MAC-Adresse der ersten Netzwerkvorrichtung (300) umfasst, die das Signal basierend auf Information des Empfangssignals überträgt.

16. Kommunikationsverfahren nach Anspruch 14, das die Lieferung des Signals an die zweite Netzwerkvorrichtung (400), basierend auf einer Medienzugriffskontrolladresse (MAC-Adresse) der voreingestellten Vorrichtung umfasst.

## Revendications

1. Connecteur comprenant :
une unité de connexion de câble (110) qui peut être connectée à un câble par lequel un signal est transmis depuis un premier appareil de réseau (300) ;
une unité de connexion d'appareil (120) qui peut être connectée à un second appareil de réseau (400) ;
une unité de communication (130) agencée pour communiquer avec le premier appareil de réseau et le second appareil de réseau ;
une unité de saisie d'identification (ID) qui fait partie intégrante du connecteur, contenant des commandes permettant à un utilisateur de saisir une ID de réseau préréglée ; et
une unité de commande (140) agencée pour commander à l'unité de communication de délivrer le signal, lequel est reçu depuis le premier appareil de réseau par l'intermédiaire de l'unité de connexion de câble, au second appareil de réseau si le premier appareil de réseau est connecté à un réseau qui a la même ID de réseau que l'ID de réseau préréglée saisie par le biais de l'unité de saisie d'ID ; et
une unité de mémorisation (160), dans lequel l'unité de commande est agencée pour mémoriser l'adresse de commande d'accès au support, MAC, du premier appareil de réseau dans l'unité de mémorisation en réponse à la détermination que le premier appareil de réseau a la même ID de réseau que l'ID de réseau préréglée.

2. Connecteur selon la revendication 1, dans lequel si le signal reçu ne contient pas l'ID de réseau, l'unité de commande (140) est agencée pour commander à l'unité de communication (130) de délivrer l'ID de réseau préréglée au second appareil de réseau.

3. Connecteur selon la revendication 1 ou la revendication 2, dans lequel l'ID de réseau préréglée consiste en données binaires d'une pluralité de bits.

4. Connecteur selon la revendication 3, dans lequel l'unité de saisie d'ID (150) comprend une unité de commutation (151) qui règle chaque bit de la pluralité de bits.

5. Connecteur selon la revendication 1, dans lequel l'unité de commande (140) est agencée pour confirmer une adresse MAC du premier appareil de réseau (300) pour le signal transmis depuis le premier appareil de réseau ayant l'ID de réseau préréglée, et si l'adresse MAC est une adresse MAC préréglée, l'unité de commande est agencée pour désigner le premier appareil de réseau (300) comme appareil préréglé.

6. Connecteur selon l'une quelconque des revendications précédentes, dans lequel l'unité de commande (140) est agencée pour supprimer l'adresse MAC du premier appareil de réseau (300) qui transmet le signal, en fonction des informations du signal reçu par l'intermédiaire de l'unité de connexion de câble (110).

7. Connecteur selon la revendication 1, dans lequel l'unité de commande (140) est agencée pour commander à l'unité de communication (130) de délivrer le signal au second appareil de réseau (400) en fonction d'une adresse de commande d'accès au support (MAC) de l'appareil préréglé.

8. Connecteur selon la revendication 1, comprenant en outre une unité de sélection de fonction (170) agencée pour recevoir un signal de sélection ON/OFF depuis un utilisateur,
dans lequel l'unité de commande (140) commande à l'unité de communication (130) de délivrer le signal, lequel est transmis par l'appareil préréglé, au second appareil de réseau (400) en fonction du signal de sélection ON/OFF par le biais de l'unité de sélection de fonction.

9. Connecteur selon la revendication 2, comprenant en outre une unité de sélection de fonction (170) agencée pour recevoir un signal de sélection ON/OFF depuis un utilisateur,
dans lequel l'unité de commande (140) est agencée pour commander à l'unité de communication (130) de délivrer l'ID de réseau préréglée au second appareil de réseau (400) en fonction du signal de sélection ON/OFF par le biais de l'unité de sélection de fonction (170).

10. Connecteur selon l'une quelconque des revendications précédentes, dans lequel le connecteur est un dongle.

11. Procédé de communication exécuté au moyen d'un connecteur, comprenant :
la saisie par un utilisateur d'une ID de réseau préréglée par l'intermédiaire de commandes faisant partie intégrante du connecteur ;
la réception d'un signal depuis un premier appareil de réseau par l'intermédiaire d'un câble (300) ;
la détermination si le premier appareil de réseau qui transmet le signal est ou non connecté à un réseau qui a la même ID de réseau que l'ID de réseau préréglée reçue depuis l'utilisateur ;
la délivrance du signal à un second appareil de réseau (400) si le premier appareil de réseau est connecté à un réseau ayant l'ID de réseau préréglée ; et
la mémorisation de l'adresse MAC du premier appareil de réseau en réponse à la détermination que le premier appareil de réseau a la même ID de réseau que l'ID de réseau préréglée.

12. Procédé de communication selon la revendication 11, dans lequel si le signal reçu ne contient pas l'ID de réseau, une ID de réseau préréglée est ajoutée au signal et le signal est délivré au second appareil de réseau (400).

13. Procédé de communication selon la revendication 11 ou 12, dans lequel l'ID de réseau préréglée consiste en données binaires d'une pluralité de bits.

14. Procédé de communication selon la revendication 11 ou la revendication 12, comprenant la confirmation d'une adresse MAC du premier appareil de réseau (300) pour le signal transmis depuis le premier appareil de réseau ayant l'ID de réseau préréglée, et la désignation du premier appareil de réseau comme appareil préréglé si l'adresse MAC est une adresse MAC préréglée.

15. Procédé de communication selon l'une quelconque des revendications 11 à 14, comprenant en outre la suppression de l'adresse MAC du premier appareil de réseau (300) qui transmet le signal en fonction des informations du signal reçu.

16. Procédé de communication selon la revendication 14, comprenant la délivrance du signal au second appareil de réseau (400) en fonction d'une adresse de commande d'accès au support (MAC) de l'appareil préréglé.
